# EUROPÄISCHE PATENTSCHRIFT

(11) **EP 2 368 848 B1**
(45) Veröffentlichungstag und Bekanntmachung des Hinweises auf die Patenterteilung: **30.04.2014**
(21) Anmeldenummer: 11157429.9
(22) Anmeldetag: 09.03.2011
(51) Int. Cl.: C01B 33/035, H01M 4/96

(54) **Kegelförmige Graphitelektrode mit hochgezogenem Rand**
Conical Graphite Electrode with Raised Edge
Electrode de graphite de forme conique ayant un bord relevé

(30) Priorität: 19.03.2010 DE 102010003069
(43) Veröffentlichungstag der Anmeldung: 28.09.2011
(73) Patentinhaber: Wacker Chemie AG, 81737 München (DE)
(72) Erfinder: Kraus, Heinz, 84367, Zeilarn (DE)
(74) Vertreter: Killinger, Andreas

(56) Entgegenhaltungen:
- EP-A1- 2 138 459
- EP-A2- 2 161 241
- WO-A1-2010/133386

## Beschreibung

Die Erfindung betrifft eine Elektrode aus Kohlenstoff mit einer kegel- oder pyramidenförmigen Spitze, die an ihrer Flanke von einem hochgezogenen Rand umgeben ist.

In der Industrie werden Graphitelektroden in vielen verschiedenen Anwendungen eingesetzt. Beispiele dafür sind die Aluminium- und Stahlgewinnung, die Elektrolyse von Salzchmelzen, die elektrolytische Zersetzung von chemischen Verbindungen, thermische Abscheidereaktionen, Lichtbogenschweißen, Messgeräte und vieles mehr.

Eine wichtige Anwendung stellt dabei die Abscheidung von Polysilicium nach dem Siemens Prozess dar, bei der hochreines elementares Silicium aus der Gasphase an der Oberfläche von Siliciumstäben abgeschieden wird. Dabei wird in einem Abschei.dereaktor an der Oberfläche eines auf 900 bis 1200 °C beheizten Silicium Dünnstabes aus einer Mischung von Wasserstoff und Halogensilanen oder einer wasserstoffhaltigen Siliciumverbindung elementares Silicium aus der Gasphase abgeschieden.
Die Siliciumstabe werden dabei im Reaktor von speziellen Elektroden gehalten, die in der Regel aus hochreinem Elektrographit bestehen. Jeweils zwei Dünnstäbe mit unterschiedlicher Spannungspolung an den Elektrodenhalterungen sind am anderen Dünnstabende mit einer Brücke zu einem geschlossenen Stromkreis verbunden. Über die Elektroden und deren Elektrodenhalterungen wird elektrische Energie zur Beheizung der Dünnstäbe zugeführt. Dabei wächst der Durchmesser der Dünnstäbe. Gleichzeitig wächst die Elektrode, beginnend an ihrer Spitze, in den Stabfuß der Siliciumstäbe ein. Nach dem Erreichen eines gewünschten Solldurchmessers der Siliciumstäbe wird der Abscheideprozess beendet. Die glühenden Siliciumstäbe werden abgekühlt und ausgebaut.

Besonderer Bedeutung kommt hier dem Material und der Form der Elektroden zu. Sie dienen zum einen der Halterung der Dünnstäbe, der Übertragung des Stromflusses in den Siliciumstab, aber auch der Wärmeübertragung und auch als sicherer Stand des heranwachsenden Stabes im Reaktor. Da der Trend zu immer längeren und schwereren Stäbe geht und die Stabpaare, die inzwischen mehrere hundert Kilo schwer sein können, nur über die Elektroden im Reaktor verankert sind, ist gerade die Wahl der Form und der Materialbeschaffenheit sehr wichtig.

Auch je nach der späteren Verwendung werden sehr unterschiedliche Anforderungen an die so erzeugten Siliciumstäbe und deren Abscheideprozess -und somit an die Elektroden- gestellt. Wird beispielsweise das polykristalline Silicium später in Siliciumbruchstücken für Solar- und Elektronik Anwendungen verwendet, dürfen die Siliciumstäbe während oder nach dem Abscheideprozess im Abscheidereaktor nicht umfallen. Lange und dicke polykristalline Siliciumstäbe erhöhen die Wirtschaftlichkeit des Abscheideprozesses, aber auch das Risiko des Umfallens im Reaktor.

Elektroden nach dem Stand der Technik bestehen im unteren Teil aus einem zylindrischen Grundkörper und im oberen Teil aus einer Kegelspitze. An der Kegelspitze ist eine Bohrung zur Aufnahme des Dünnstabs angebracht. Das untere Ende der Elektrode wird dabei in eine metallische Elektrodenhalterung gesetzt, über die der Strom zugeführt wird. Solche Elektroden sind allgemein bekannt und werden beispielsweise in der US-5,284,640 zur Siliciumabscheidung verwendet.

Als Werkstoff für die Elektroden wird hauptsächlich Graphit verwendet, da Graphit in sehr hoher Reinheit verfügbar ist und bei Abscheidebedingungen chemisch inert ist. Weiterhin hat Graphit einen sehr geringen spezifischen elektrischen Widerstand.

US-6,639,192 beschreibt eine Craphitelektrode mit herkömmlicher Form. Sie besteht aus einem zylindrischen Grundkörper mit kegelförmiger Spitze. Die Spitze enthält eine Bohrung zur Aufnahme des Dünnstabs. Die Elektrode ist aus einem Teil und somit aus einem Werkstoff (hier Elektrographit) mit homogenen Materialeigenschaften gefertigt. Sie hat insbesondere eine sehr hohe spezifische Wärmeleitfähigkeit. Nachteilig bei dieser Ausführungsform ist eine hohe Umfallquote vor und während der Abscheidung bis zum Erreichen des Enddurchmessers.

DE-2328303 beschreibt eine zylindrischen Elektrode ohne Spitze. Der Trägerstab steckt dabei in einer Bohrung auf planer Fläche. Diese Elektrodenform hat bereits bei dünnem Stabdurchmesser aufgrund der vollzylindrischen Form eine sehr hohe Wärmeableitung. Damit die Stäbe bei dünnem Durchmesser während des Abscheideprozesses nicht umfallen, muss die Elektrode eine geringe Wärmeableitung haben, d.h. von geringem Durchmesser sein und der Elektrodenwerkstoff eine sehr niedrige spezifische Wärmeleitfähigkeit haben. Dicke Stäbe, wie sie heute üblich sind, können mit dieser Elektrodenform nicht abgeschieden werden, da aufgrund des geringen Elektrodendurchmessers und der niedrigen spezifischen Wärmeleitfähigkeit des Elektrodenwerkstoffs die für dicke Stabdurchmesser notwendige hohe Energie aus den Stabfüßen nicht abgeführt werden kann.

Graphitelektroden aus mehreren Schichten sind aus anderen Bereichen bekannt. Die Anordnung von verschiedenen Schichten zielt dort aber auf die Optimierung von chemischen Umsätzen. Aus US-3,676,324 ist beispielsweise eine zylindrische Graphitelektrode bekannt, die aus einem zylindrischen inneren und äußeren Teil besteht, wobei der innere Teil eine sehr hohe elektrische Leitfähigkeit besitzt und der äußere Teil ein poröser Graphit ist. Das Ziel dieser mehreren Schichten ist, hohe Spannungsverluste zu vermeiden und einen hohen chemischen Umsatz an der porösen Oberfläche zu erhalten. Eine ähnliche Elektrode mit zwei unterschiedlichen Schichten ist aus GR-2135334 bekannt, wobei hier die äußere poröse Schicht zur elektrolytischen Gewinnung von Fluor dient.

EP 2 161 241 A2 offenbart eine auf einer Halterung befindliche Elektrode aus Kohlenstoff mit einer Vorrichtung zur Aufnahme eines Filamentstabs, mit einer Wärmekappe zwischen dieser Vorrichtung und dcr Elcktrodenhalterung, wobei die Wärmekappe eine ringförmige Schutzabdeckung aufweist.

EP 2 138 459 Al offenbart eine Elektrode, eine in einer Öffnung der Bodenplatte eines Reaktors befindliche Elektrodenhalterung, mit einem ringförmigen isolierenden Material, das zwischen einer inneren peripheren Oberfläche der Öffnung der Bodenplatte und einer äußeren Umfangsfläche des Elektrodenhalters ausgebildet ist, um Bodenplatte und Elektrodenhalterung elektrisch zu isolieren.

Nachteilig an allen aus dem Stand der Technik bekannten Elektroden ist, dass diese am Übergang zwischen Elektrode zum Siliciumstab oder im Siliciumstab in der Nähe der Elektrode mehr oder minder zur Rissbildung oder zur Abplatzung von Material neigen und somit den Siliciumstab instabil machen.

Umgefallene Chargen bedeuten einen großen wirtschaftlichen Schaden. So kann es beispielsweise beim Umfallen der Siliciumstäbe zu Beschädigungen der Reaktorwandung kommen. Die umgefallenen Siliciumstäbe werden dabei durch den Kontakt mit der Reaktorwandung verunreinigt und müssen an der Oberfläche gereinigt werden. Zusätzlich können umgefallene Chargen nur mit erhöhtem Aufwand aus dem Reaktor ausgebaut werden. Dabei wird die Oberfläche des Siliciums weiter kontaminiert.

Aufgabe der Erfindung war es, eine Elektrode bereitzustellen, mit der die Umfallquote gegenüber Elektroden herkömmlicher Bauart deutlich reduziert wird.

Diese Aufgabe wird gelöst durch die Elektrode nach Anspruch 1 sowie das Verfahren nach Anspruch 12.

überraschenderweise wurde gefunden, dass eine Elektrode aus Kollenstoff mit einer kegel- oder pyramidenförmigen Spitze, die von einem hochgezogenen Rand umgeben ist, beim Wachstum des darin befestigten Filamentstabes eine verbesserte Wärmeableitung und eine verbesserte Verteilung der Stromdichte in Relation zur Stabdicke aufweist. Es handelt sich um eine Elektrode aus Kohlenstoff mit einer kegel- oder pyramidenförmigen Spitze, welche eine Vorrichtung zur Aufnahme eines Filamentstabes besitzt, wobei die kegel- oder pyramidenförmige Spitze an ihrer Flanke von mindestens einem hochgezogenen Rand umgeben ist.

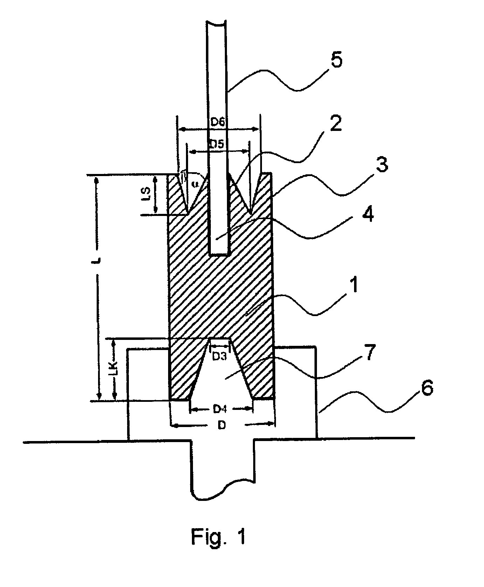

Die erfindungsgemäße Elektrode (Fig. 1) besteht aus einem zylindrischen Grundkörper (1) mit einer Spitze (2), die von einem hochgezogenen Rand (3) umgeben ist. In diese Spitze ist ein Hohlraum (4) eingebracht, der später zur Aufnahme des Werkstücks, beispielsweise eines Filamentstabes (5) dient. Dieser Hohlraum kann zylindrisch, konisch oder eine andere beliebige Form haben. Entsprechend hat das Werkstück ebenfalls eine zylindrische, konische oder andere beliebige, zum Hohlraum passende Form.

Die erfindungsgemäße Elektrode kann für alle Anwendungen eingesetzt werden, bei denen vergleichmäßigte Stromdichten in der Elektrode und auf deren Oberfläche benötigt werden. Bevorzugt wird die erfindungsgemäße Elektrode bei der Abscheidung von Polysilicium verwendet.
Die vergleichmäßigte Stromdichte über dem Querschnitt des Stabfußes gegenüber einer Elektrode mit Standardform, d.h. Grundkörper mit Spitze, ergibt sich durch den niedrigeren spezifischen elektrischen Widerstand des Graphits gegenüber Silicium.

Beim Beginn einer Abscheidung von Polysilicium auf einem Filamentstab, d.h. bei noch dünnem Stabdurchmesser, wächst bei der erfindungsgemäßen Elektrode der Stabfuß zuerst, wie bei einer Standardelektrode, nur auf die Spitze auf. Bei Verwendung eines Werkstoffs für die Elektrode mit geringer spezifischer Wärmeleitung ist die Wärmeableitung bei dünnem Stabdurchmesser über die Elektrode gering. Die Elektrodenspitze verwächst damit gut mit der Elektrode und wächst schnell in den Stabfuß ein. Damit wird bereits zu Beginn der Abscheidung für eine hohe Standfestigkeit gesorgt und das Risiko von umfallenden Stäben vor Erreichen des Enddurchmessers minimiert.

Da die Spitze der erfindungsgemäßen Elektrode von einem hochgezogenen Rand (3) umgeben ist, wächst bei größer werdendem Stabdurchmesser der immer größer werdende Stabfuß auf den hochgezogenen Rand auf. Der hochgezogene Rand bietet dem Stabfuß dabei zusätzlichen statischen Halt. Weiterhin wird die Stromdichte beim Übergang von Elektrode zum Stabfuß über dem Querschnitt des hochgezogenen Randes vergleichmäßigt.

Bei der erfindungsgemäßen Elektrode mit hochgezogenem Rand stellt sich ein geringerer Temperaturgradient von der Mitte zur Staboberfläche ein als im Vergleich zu einer Elektrode mit Standardform. Dadurch werden thermische Verspannungen, die sich durch Bildung von Rissen und Absprüngen freisetzen, gegenüber eines Stabfußes mit herkömmlicher Elektrode minimiert.
Der geringere Temperaturgradient im Stabfuß mit einer erfindungsgemäßen Elektrode wird durch eine gleichmäßigere Stromdichte und durch bessere Wärmeableitung, welches beides durch den hochgezogenen Rand gewährleistet wird, erreicht.

Durch Variation der Höhe des hochgezogenen Randes der erfindungsgemäßen Elektrode im Vergleich zur Elektrodenspitze kann die lokale Verteilung der Stromdichte über den Elektrodenquerschnitt, beim Übergang Elektrode zu Stabfuß, sowie die Wärmeableitung aus dem Stabfuß, variiert werden. Ein im Vergleich zur Elektrodenspitze höher gelegener Elektrodenrand erhöht die Stromdichte ausserhalb der Mitte des Stabfußes. Die Wärmeableitung aus dem Stabfuß wird damit ebenfalls erhöht. Ist die Elektrodenspitze höher als der sie umgebende hochgezogene Elektrodenrand, so wird die Stromdichte in der Stabfußmitte erhöht. Die Wärmeableitung aus dem Stabfuß wird dabei verschlechtert.

Der die Spitze umgebende hochgezogene Rand der erfindungsgemäßen Elektrode kann höher oder niedriger als die Spitze ausgeformt sein oder dieselbe Höhe besitzen. Der hochgezogene Elektrodenrand kann 40 mm unterhalb der Spitze bis 60 mm oberhalb der Spitze liegen, bevorzugt ist ein Bereich von 25 mm unterhalb der Spitze bis 25 mm oberhalb der Spitze und besonders bevorzugt 10 mm unterhalb der Spitze bis 10 mm oberhalb der Elektrodenspitze.

Die spezifische Wärmeleitfähigkeit des verwendeten Graphitmaterials, gemessen bei Raumtemperatur nach DIN 51908, beträgt 20 bis 200 W/(m*K), bevorzugt 20 bis 120 W/(m*K) und besonders bevorzugt 20 bis 90 W/(m*K).

Aufgrund der besonderen Form der Elektrode kann als Werkstoff eine Graphitsorte mit niedriger spezifischer Wärmeleitfähigkeit im Bereich 20 bis 90 W/(m*K) gewählt werden.

Dies führt dazu, dass die Stabfüße bei geringem Stabdurchmesser nicht partiell auskühlen. Umfallen bei dünnem Stabdurchmesser wird dadurch verhindert. Aufgrund der durchgehend zylindrischen Form und des großen Elektrodenquerschnitts im eingewachsenen Teil und Vergleichmäßigung der Stromdichte über dem gesamten Elektrodenquerschnitt ist der Temperaturgradient bei dickem Stabdurchmesser selbst bei Verwendung eines Elektrodenwerkstoffs mit vergleichsweise niedriger spezifischer Wärmeleitfähigkeit gering. Die Stäbe stehen bei dickem Stabdurchmesser noch stabil in der Abscheideanlage. Einzelne sichtbare Risse an den Stabfüßen sind selten. Die Umfallquote nach Erreichen des Enddurchmessers liegt bei nur ca. 2% aller Chargen und während der Abscheidung fallen keine Chargen bis zum Erreichen des Enddurchmessers um.

Der Elektrodenwerkstoff hat im Reaktionsbereich zwischen 900°C und 1200°C eine deutlich höhere spezifische Wärmeleitfähigkeit als polykristallines Silicium. Da der gesamte in den Stabfuß eingewachsene Teil der Elektrode, mit Ausnahme der kleinen Spitze, einen zylindrischen, massiven Querschnitt hat, steht für die Wärmeableitung bei der erfindungsgemäßen Elektrode bei großem Stabdurchmesser ein deutlich größerer Querschnitt als bei herkömmlichen Elektrodenformen zur Verfügung. Die Wärmeableitung aus dem Stabfuß ist dadurch stark verbessert.

Gleichmäßigere Stromdichte über den Elektrodenquerschnitt und größerer Elektrodenquerschnitt am Elektrodenende zum Stabfuß ergeben in Summe einen flacheren Temperaturgradienten vom Zentrum des Stabfußes zu dessen Oberfläche. Die thermischen Verspannungen sind dabei geringer als bei bekannten Elektroden mit ausschließlich konischer Spitze. Die Stromdichte der erfindungsgemäßen Elektrode konnte über den gesamten Elektrodenquerschnitt vergleichmäßigt werden. Aufgrund der gleichmäßigeren Stromdichte und des größeren Elektrodenquerschnitts am Elektrodenende zum Stabfuß ist die Überhitzung im Zentrum des Stabfußes wesentlich geringer als bei Elektroden mit herkömmlicher Form.

Zur Aufnahme der erfindungsgemäßen Elektrode im Abscheidereaktor können beliebige aus dem Stand der Technik bekannte Elektrodenhalterungen (6) verwendet werden. Zur Verbesserung der Wärmeableitung der gesamten Elektrode kann die Elektrodenhalterung auch einen zusätzlichen Kühlkörper (7) aufweisen, der am unteren Ende der Basis angeordnet ist und/oder in die Basis hineinragt. Dieser Kühlkörper ist in der Regel Bestandteil der Elektrodenhalterung und vorzugsweise aus einem Stück mit der Elektrodenhalterung gefertigt. Als Materialien eignen sich alle bekannten Materialien aus gut wärme- und elektrisch leitendem Material, wie beispielsweise Metall. Der Kühlkörper wird mit einem geeigneten Wärmeträger, z.B. Wasser, gekühlt. Wichtig ist ein sehr guter thermischer und elektrischer Kontakt des Kühlkörpers mit der Basis, damit hohe und über dem Umfang des Einsatzes gleichmäßige elektrische und thermische Leitfähigkeit besteht. Die Form des Kühlkörpers kann beliebig sein, bevorzugt wird eine zylindrische oder konische Form, besonders bevorzugt eine konische Form.

Als Material für die erfindungsgemäße Elektrode können alle bekannten Arten von Kohlenstoff verwendet werden, die für den Einsatz als Elektroden geeignet sind. Aus Reinheitsgründen wird bevorzugt ein hochreiner Elektrographit mit unterschiedlichen Wärmeleitfähigkeiten eingesetzt. Es können aber auch andere Materialien wie beispielsweise Siliciumcarbid, Carbon Fiber reinforced Carbon (CFC) Verbundwerkstoffe, Wolfram oder andere hochschmelzende Metalle verwendet werden. Auch eine Beschichtung der Elektrode mit Materialien wie beispielsweise Silicium, Siliciumcarbid, Siliciumnitrid, Pyrokohlenstoff, Glaskohlenstoff oder Silicene d.h. Nano Silicium, ist möglich. Bevorzugt wird dabei eine Schichtdicke kleiner 100µm.

Figur 1 zeigt den schematischen Aufbau der erfindungsgemäßen Elektrode. Die Höhe der gesamten Elektrode (L), umfassend die innere Spitze und den äußeren, hochgezogenen Rand, beträgt 70 bis 200 mm, bevorzugt 70 bis 150 mm und besonders bevorzugt 80 bis 130 mm.

Der Durchmesser der Elektrode (D) beträgt 30 bis 100 mm, bevorzugt 40 bis 80 mm und besonders bevorzugt 45 bis 70 mm. Die Höhe der Elektrodenspitze (LS) beträgt 10 bis 40 mm, bevorzugt 15 bis 30 mm, besonders bevorzugt 15 bis 25 mm. Der Durchmesser der Elektrodenspitze (D5) beträgt 20 bis 50 mm, bevorzugt 25 bis 45 mm und besonders bevorzugt 30 bis 40 mm. Der hochgezogene Elektrodenrand kann 40 mm unterhalb der Spitze bis 60 mm oberhalb der Spitze liegen, bevorzugt ist ein Bereich von 25 mm unterhalb der Spitze bis 25 mm oberhalb der Spitze und besonders bevorzugt 10 mm unterhalb der Spitze bis 10 mm oberhalb der Elektrodenspitze.

Die Spitze kann kegelförmig oder pyramidenförmig mit n Seiten, wobei n größer oder gleich 3 ist, ausgeformt sein. Bevorzugt ist eine kegelförmige Spitze. Die Spitze kann mittig oder außermittig, bezogen auf die Grundfläche der Elektrode, angeordnet sein. Eine außermitte Anordnung der Elektrodenspitze, und damit verbunden der Bohrung zur Aufnahme des Filamentstabes, erlaubt später eine horizontale Ausrichtung der Dünnstäbe im Reaktor zueinander. Dazu kann die Elektrode direkt oder zusammen mit der Elektrodenhalterung mittels einer Drehbewegung in die optimale Position gebracht werden. Bevorzugt wird eine Anordnung der Spitze der Elektrode mit einer Verschiebung im Bereich von 0 bis 20 mm, bezogen auf den Mittelpunkt der Grundfläche der Elektrode.

Der Durchmesser des Innenrandes (D6) beträgt 25 bis 80 mm, bevorzugt 35 bis 60 mm und besonders bevorzugt 35 bis 50 mm. Der Konuswinkel (α) beträgt 15° bis 45°, bevorzugt 20° bis 35°, besonders bevorzugt 20 bis 30°, der Winkel (β) 0 bis 45°, bevorzugt 20 bis 35°, besonders bevorzugt 20 bis 30°. Das obere Ende des hochgezogenen Randes ergibt sich aus dem Dünnstabdurchmesser, den Winkeln a und β, dem Durchmesser der Elektrode (D) und dem Durchmesser des Innenrandes (D6). Die Breite kann von 0 mm (spitze Kante) bis 30 mm betragen, bevorzugt von 3 bis 20 mm, besonders bevorzugt von 3 bis 10 mm. Der Durchmesser des Kühlkörpers beträgt am oberen Ende (D3) 10 bis 60 mm, bevorzugt 10 bis 50 mm und besonders bevorzugt 15 bis 45 mm und am unteren Ende(D4) 10 bis 60 mm, bevorzugt 10 bis 50 mm und besonders bevorzugt 15 bis 45 mm.
Die Länge des Kühlkörper (LK) beträgt 20 bis 80 mm, bevorzugt 20 bis 60 mm und besonders bevorzugt 30 bis 50 mm.

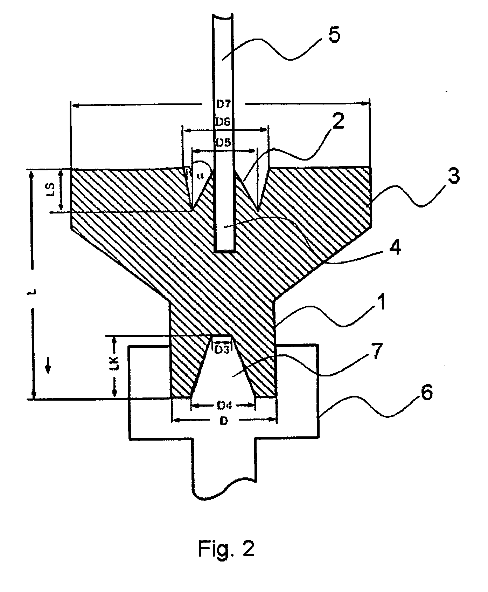

In einer weiteren Ausführungsform der erfindungsgemäßen Elektrode (Fig. 2) kann der äußere, hochgezogene Rand auch verbreitert werden und zur Grundfläche der Elektrode einen stufenförmigen oder konischen Übergang bilden. Der erweiterte obere Rand besitzt in dieser Ausführungsform einen Durchmesser (D7) von 30 bis 200 mm, bevorzugt 40 bis 150 mm, besonders bevorzugt 45 bis 120 mm. Grundsätzlich kann der obere Rand dabei spitz, abgerundet, schräg oder flach ausgebildet sein.

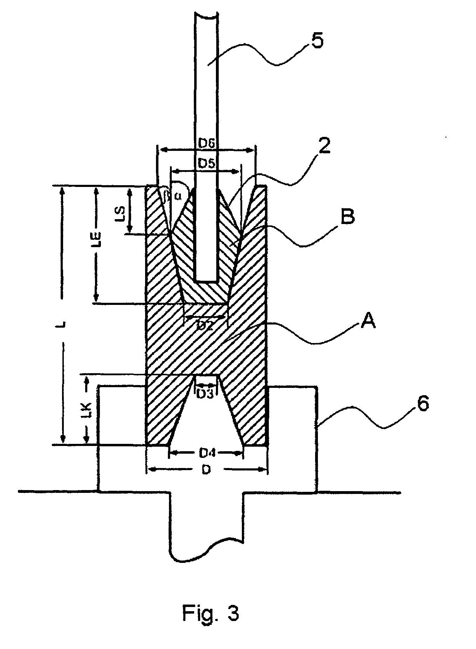

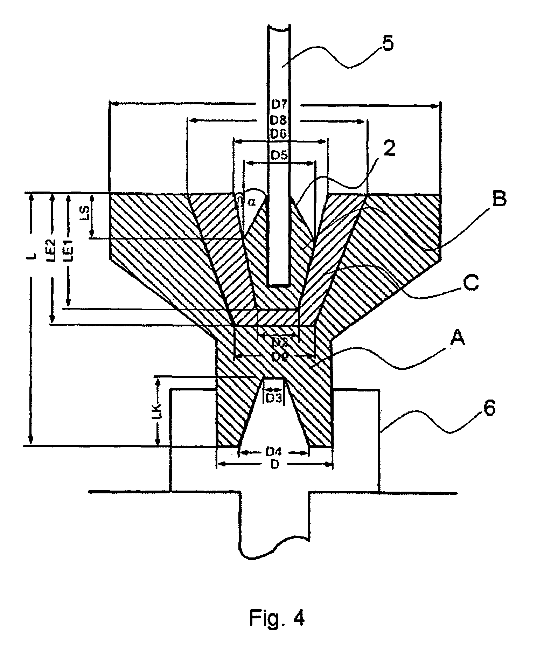

Als weitere besondere Ausführungsform der erfindungsgemäßen Elektrode kann die Spitze auch aus einem Material mit einer niedrigeren Wärmeleitfähigkeit bestehen als die Basis der Elektrode. Die Elektrode besteht dann aus mindestens 2 Teilen (Fig. 3 und Fig. 4), einer Elektroden-Basis (A) und mindestes eine in diese Basis eingesetze weitere innere Zone (B). Die Elektrode kann zusätzlich zwischen der Zone (A) und der Zone (B) auch noch weitere Zonen (C) aufweisen, wobei die innerste Zone den Dünnstab (5) aufnimmt. Einsätze und Basis sind dabei aus mindestens 2 verschiedenen Werkstoffen aufgebaut, wobei der innerste Einsatz (Zone (B)) aus dem Werkstoff mit der niedrigsten Wärmeleitfähigkeit besteht. Die weiteren Einsätze sind aus Werkstoffen mit höheren spezifischen Wärmeleitfähigkeiten gefertigt, wobei die spezifische Wärmeleitfähigkeit bevorzugt von innen nach aussen ansteigt.

Durch die Einteilung in verschiedene Zonen aus unterschiedlichen Materialien und verschiedenen Wärmeleitfähigkeiten kann die Elektrode optimal auf die verschiedenen Anforderungen beim Wachstum des darauf befestigten Materials, beispielsweise eines Siliciumstabes, angepasst werden. Beim Beginn des Wachstums und damit bei dünnem Stabdurchmesser wächst der Stabfuß zuerst nur auf dem Einsatz der niedrigeren Wärmeleitfähikeit. Wegen der geringen Wärmeableitung über den Einsatz (Zone B) aufgrund des verwendeten Graphits mit niedriger spezifischer Wärmeleitfähigkeit wird bei Beginn des Wachstums über die gesamte Elektrode und deren Elektrodenhalterung wenig Wärme abgeführt, und man erhält bei noch dünnen Stabdurchmessern eine hohe Temperatur an der Verbindung der Elektrode zum Siliciumstab. Kältere Bereiche am Stabfuß, an denen aufgrund zu niedriger Temperatur Ätzprozesse auftreten können, sind nicht vorhanden. Der Stabfuß verwächst damit schnell und ohne Fehler mit der Elektrodenspitze (2) in Zone (B). Ein Umfallen bei dünnem Stabdurchmesser während des Abscheideprozesses tritt dadurch nahezu nicht auf.

Bei fortschreitendem Abscheideprozess und dicker werdenden Stäben wächst der Stabfuß weiter über den Einsatz auf die Basis (Zone (A)) und umwächst die Basis. Aufgund der höheren Wärmeleitfähigkeit der Basis kann die Energie aus dem Stabfuß sehr gut abgeleitet werden. Der Temperaturgradient am Stabfuß und thermische Verspannungen sind damit stark reduziert. Risse und Absprünge am Stabfuß treten deutlich seltener auf.

Die innere Zone (B) der erfinderischen Elektrode kann direkt bei der Herstellung der Elektrode eingearbeitet werden oder als loser oder wechselbarer Einsatz ausgebildet sein.

Die innere Zone (B) bildet dabei die Spitze (2) der Elektrode und steckt mit dem der Spitze abgewandten Ende in der Basis. Die Verbindung der Basis zum Einsatz kann konisch, zylindrisch oder eine andere beliebige Form haben. In der Praxis hat sich eine konische Steckverbindung bewährt, da mit einer konischen Verbindung sichergestellt wird, dass Basis und Einsatz eine mechanisch feste Verbindung bilden und einen guten thermischen und elektrischen Kontakt haben. Zwischen die Zonen kann zur Verbesserung der Leitfähigkeit auch ein Zusatzstoff eingebracht werden.

Die zwischen den Zonen (A) und (B) optional angeordneten weiteren Zonen (C) können dabei ein Teil der kegelförmigen Spitze darstellen, einen Teil des hochgezogenen Rands oder Teile von beiden sein.

Die spezifische Wärmeleitfähigkeit, gemessen bei Raumtemperatur nach DIN 51908, der Zone (A) der bevorzugten Ausführungsform der erfindungsgemäßen Elektrode beträgt 80 bis 200 W/(m*K), bevorzugt 100 bis 180 W/(m*K) und besonders bevorzugt 130 bis 160 W/(m*K). Die spezifische Wärmeleitfähigkeit der inneren Zone (B) beträgt 20 bis 100 W/(m*K), bevorzugt 20 bis 80 W/(m*K) und besonders bevorzugt 20 bis 70 W/(m*K).

Der spezifische elektrische Widerstand des verwendeten Graphitmaterials, gemessen bei Raumtemperatur nach DIN 51911, liegt zwischen 30 und 5 µOhm*m, bevorzugt 30 bis 10 µOhm*m, besonders bevorzugt zwischen 30 bis 15 µOhm*m.

Der arithmetische Mittelrauwert der Oberflächenrauigkeit Ra des verwendeten Graphitmaterials, gemessen nach DIN EN ISO 4287 liegt zwischen 1 und 20 µm, bevorzugt zwischen 1 und 15 µm, besonders bevorzugt zwischen 1 und 10 µm bei einer Gesamthöhe des Rauheitsprofils Rt zwischen 10 und 200 µm, bevorzugt zwischen 10 und 150 µm, besondes bevorzugt zwischen 10 und 100 µm und einer gemittelten Rautiefe Rz zwischen 8 und 160 µm, bevorzugt zwischen 8 und 120 µm, besonders bevorzugt zwischen 8 und 80 µm.

Die Druckfestigkeit des verwendeten Graphitmaterials, gemessen bei Raumtemperatur nach DIN 51910, liegt zwischen 40 und 250 MPa, bevorzugt zwischen 50 und 200 MPa, besonders bevorzugt zwischen 50 und 150 MPa.

Die Biegefestigkeit des verwendeten Graphitmaterials, gemessen bei Raumtemperatur nach DIN 51902, liegt zwischen 10 und 100 MPa, bevorzugt zwischen 15 und 80 MPa, besonders bevorzugt zwischen 20 und 70 MPa.

Das Elastizitätsmodul des verwendeten Graphitmaterials, gemessen bei Raumtemperatur nach DIN 51915, liegt zwischen 1 und 20 GPa, bevorzugt zwischen 2 und 15 GPa, besonders bevorzugt zwischen 3 und 15 GPa.

Der lineare thermische Ausdehnungskoeffizient des verwendeten Graphitmaterials im Temperaturbereich 20 bis 1000 °C, gemessen nach DIN 51909, liegt zwischen 2*10⁻⁶ und 10*10⁻⁶ 1/K, bevorzugt zwischen 3*10⁻⁶ und 8*10⁻⁶ 1/K, besonders bevorzugt zwischen 3,5*10⁻⁶ und 7*10⁶ 1/K.

Die offene Porosität des verwendeten Graphitmaterials, gemessen nach DIN 51918, liegt zwischen 5 und 25%, bevorzugt zwischen 10 und 25%, besonders bevorzugt zwischen 10 und 20%.

Figur 3 zeigt beispielhaft die besondere Ausführungsform der erfindungsgemäßen Elektrode mit einem Einsatz, wodurch verschiedenen Zonen mit unterschiedlicher Wärmeleitfähigkeit ausbildet werden.
Die Länge (LE) des inneren Einsatzes (Zone (B)) beträgt 30 bis 90 mm, bevorzugt 35 bis 80 mm und besonders bevorzugt 35 bis 65 mm.
Der Durchmesser des Einsatzes (D5) beträgt an seiner breitesten Stelle 20 bis 50 mm, bevorzugt 25 bis 45 mm und besonders bevorzugt 30 bis 40 mm.
Der Durchmesser des Einsatzes an seinem unteren Ende (D2) beträgt 15 bis 40 mm, bevorzugt 20 bis 40 mm und besonders bevorzugt 20 bis 35 mm.

Die erfindungsgemäße Elekrode kann auch 2 oder mehrere ineinandergesteckte Einsätze haben (Figur 4), wobei der innere Einsatz die Zone (B) mit der Elektrodenspitze bildet. Der innere Einsatz steckt in einer benachbarten Zone (C), die wiederum in einem weiteren Einsatz stecken kann, usw. Der letzte Einsatz steckt in Zone (A), der Basis der Elektrode.

Die unterschiedlichen Zonen mit verschiedenen spezifischen Wärmeleitfähigkeiten innerhalb der Elektrode können auch während des Herstellprozess einer Elektrode aus einem Stück erzeugt werden. In diesem Fall besitzt eine einteilige Elektrode die erfindungsgemäßen verschiedene Zonen aus verschiedenem Material und diese können auch einen fließenden Übergang des verwendeten Materials zur jeweils nächsten Zone aufweisen.

Durch die Kombination der erfinderischen Elektrodenform mit verschiedenen eingesetzten Zonen unterschiedlicher spezifischer Wärmeleitfähigkeit und einem erweiterten Elektrodenrand kann die Gesamtwärmeleitfähigkeit der Elektrode individuell an die Erfordernisse des Abscheideprozesses angepasst werden.
Mit der speziellen Kombination dieser Ausführungen können die Quoten der umgefallenen Polysiliciumstäbe im Reaktor fast gänzlich eliminiert werden.

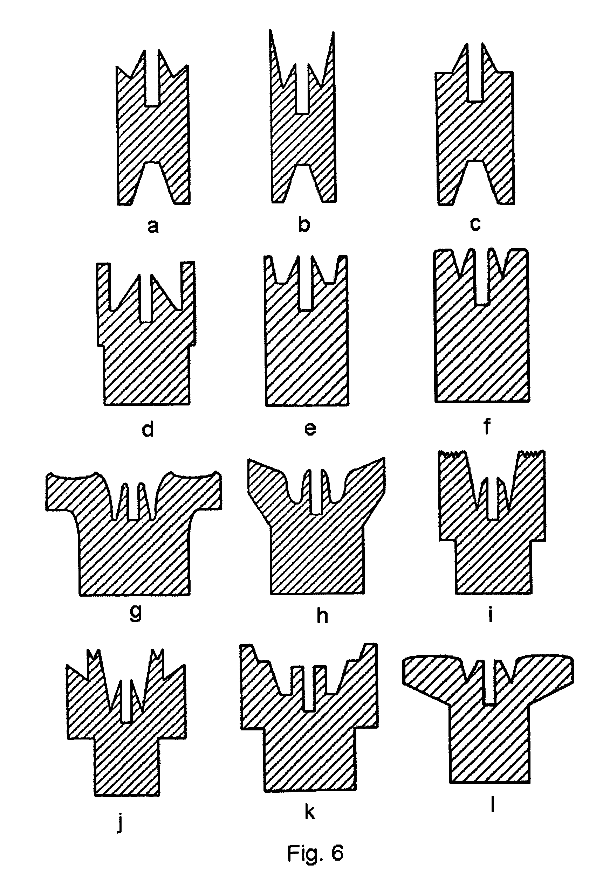

Figur 6 zeigt eine Auswahl an verschiedenen Formen(a - 1) der erfindungsgemäßen Elektrode mit und ohne verbreitertem Rand im Querschnitt. Die Beispiele zeigen der besseren Übersichtlichkeit halber nur Elektroden ohne verschiedene Zonen. Selbstverständlich können alle diese Formen entsprechend ihrer späteren Anforderung auch erfindungsgemäß aus mehreren Zonen mit unterschiedlicher spezifischer Wärmeleitfähigkeit ausgestaltet sein.

Anhand der folgenden Beispiele soll die Erfindung näher erläutert werden.

In einem Siemens Abscheidereaktor wurden polykristalline Siliciumstäbe mit einem Durchmesser zwischen 140 und 200 mm abgeschieden. Dabei wurden mehrere Ausführungen an Elektroden getestet. Die Parameter des Abscheideprozesses waren bei allen Versuchen jeweils gleich. Die Versuche unterschieden sich nur in der Ausführung der Elektrode. Die Abscheidetemperatur lag im Chargenverlauf zwischen 1000 °C und 1100 °C. Während des Abscheideprozesses wurde ein Feed bestehend aus einer oder mehreren chlorhaltigen Silanverbindungen der Formel SiHₙCl₄₋ₙ (mit n = 0 bis 4) und Wasserstoff als Trägergas zugegeben.

### Vergleichsbeispiel 1:

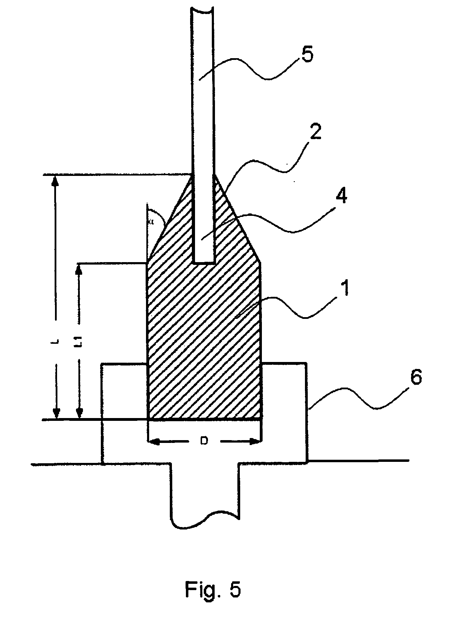

Zur Abscheidung wurden Elektroden nach dem Stand der Technik verwendet (FIG. 5). Die verwendeten Elektroden bestanden aus höchstreinem Elektrographit mit einer spezifischen Wärmeleitfähigkeit von 80 W/(m*K). Die Gesamtlänge (L) betrug 118 mm und die zylindrische Länge (L1) 72 mm. Der Konuswinkel (α) betrug 32° und der Durchmesser (D) 65 mm. Es wurde eine Elektrode ohne Kühlkörper verwendet.
Am Ende der Reaktion wurde der Reaktor geöffnet und die Anzahl der Chargen mit umgefallenen Polysiliciumstäben notiert. Von 100 Chargen waren 20 Chargen nach Erreichen des Enddurchmessers umgefallen.

### Vergleichsbeispiel 2:

Zur Abscheidung wurden Elektroden nach dem Stand der Technik verwendet (FIG. 5). Die verwendeten Elektroden bestanden aus höchstreinem Elektrographit mit einer spezifischen Wärmeleitfähigkeit von 150 W/(m*K). Die Gesamtlänge (L) betrug 118 mm und die zylindrische Länge (L1) 72 mm. Der Konuswinkel (α) betrug 32° und der Durchmesser (D) 65 mm. Es wurde eine Elektrode ohne Kühlkörper verwendet.
Am Ende der Reaktion wurde der Reaktor geöffnet und die Anzahl der Chargen mit umgefallenen Polysiliciumstäben notiert.
Von 100 Chargen waren 10 Chargen vor Erreichen des Enddurchmessers während der Abscheidung umgefallen und 2 Chargen nach Erreichen des Enddurchmessers umgefallen.

### Beispiel 1:

Zur Abscheidung wurden erfindungsgemäße Elektroden mit hochgezogenem Rand verwendet, wie sie in Fig. 1 dargestellt sind. Zusätzlich wurde an der Basis der Elektrode ein Kühlkörper verwendet. Die verwendeten Elektroden bestanden aus höchstreinem Elektrographit mit einer spezifischen Wärmeleitfähigkeit von 80 W/(m*K) und einem spezifischen elektrischen Widerstand von 15 µOhm*m.

Die Elektrode hatte folgende Geometrie:

| | |
|---|---|
| Gesamtlänge (L): | 118 mm |
| Durchmesser (D): | 65 mm |
| Konuswinkel (α): | 32° |
| Konuswinkel (β) : | 16° |
| Länge Elektrodenspitze (LS) : | 21 mm |
| Durchmesser Elektrodenspitze (D5) : | 34 mm |
| Durchmesser Innenrand (D6) : | 46 mm |
| Durchmesser Kühlkörper (D3) : | 25 mm |
| Durchmesser Kühlkörper (D4) : | 45 mm |
| Länge Kühlkörper (LK) : | 50 mm |

Am Ende der Reaktion wurde der Reaktor geöffnet und die Anzahl der Chargen mit umgefallenen Polysiliciumstäben notiert. Von 100 Chargen waren 2 Chargen nach Erreichen des Enddurchmessers umgefallen, vor Erreichen des Endurchmessers während der Abscheidung sind keine Chargen umgefallen.

### Beispiel 2:

Zur Abscheidung wurden erfindungsgemäße Elektroden mit hochgezogenem Rand verwendet, die aus 2 verschiedenen Zonen unterschiedlicher spezifischer Wärmeleitfähigkeit bestanden (siehe Fig. 3). Zusätzlich wurde an der Basis der Elektrode ein Kühlkörper verwendet. Zone (A) der verwendeten Elektroden bestand aus höchstreinem Elektrographit mit einer spezifischen Wärmeleitfähigkeit von 135 W/(m*K) und einem spezifischen elektrischen Widerstand von 10 µOhm*m. Für die innere Zone (B) wurde ein höchstreiner Elektrographit mit einer spezifischen Wärmeleitfähigkeit von 50 W/(m*K) und einem spezifischen elektrischen Widerstand von 22 µOhm*m verwendet.

Die Elektrode hatte folgende Geometie:

| | |
|---|---|
| Gesamtlänge (L): | 118 mm |
| Durchmesser (D): | 65 mm |
| Konuswinkel (α): | 32° |
| Konuswinkel (β): | 16° |
| Länge Elektrodenspitze (LS): | 21 mm |
| Durchmesser Elektrodenspitze (D5): | 34 mm |
| Durchmesser Innenrand (D6): | 46 mm |
| Länge Einsatz (LE): | 46 mm |
| Durchmesser Einsatz (D1): | 34 mm |
| Durchmesser Einsatz (D2): | 22 mm |
| Durchmesser Kühlkörper (D3): | 25 mm |
| Durchmesser Kühlkörper (D4): | 45 mm |
| Länge Kühlkörper (LK): | 50 mm |

Am Ende der Reaktion wurde der Reaktor geöffnet und die Anzahl der Chargen mit umgefallenen Polysiliciumstäben notiert. Von 100 Chargen war 1 Charge nach Erreichen des Enddurchmessers umgefallen. Vor Erreichen des Endurchmessers während der Abscheidung sind keine Chargen umgefallen.

### Beispiel 3:

Zur Abscheidung wurden erfindungsgemäße Elektroden mit hochgezogenem Rand verwendet. Zusätzlich wurde bei dieser Elektrode der obere Rand verbreitert (siehe (Fig. 2). Zusätzlich wurde an der Basis der Elektrode ein Kühlkörper verwendet. Die verwendeten Elektroden bestanden aus höchstreinem Elektrographit mit einer spezifischen Wärmeleitfähigkeit von 80 W/(m*K) und einem spezifischen elektrischen Widerstand 15 µOhm*m.

Die Elektrode hatte folgende Geometrie:

| | |
|---|---|
| Gesamtlänge (L): | 118 mm |
| Durchmesser (D): | 65 mm |
| Konuswinkel (α): | 32° |
| Konuswinkel (β) : | 16° |
| Länge Elektrodenspitze (LS): | 21 mm |
| Durchmesser Elektrodenspitze (D5): | 34 mm |
| Durchmesser Innenrand (D6): | 46 mm |
| Durchmesser verbreiterter Rand (D7): | 130 mm |
| Durchmesser Kühlkörper (D3): | 25 mm |
| Durchmesser Kühlkörper (D4): | 45 mm |
| Länge Kühlkörper (LK): | 50 mm |

Am Ende der Reaktion wurde der Reaktor geöffnet und die Anzahl der Chargen mit umgefallenen Polysiliciumstäben notiert. Von 100 Chargen war 1 Charge nach Erreichen des Enddurchmessers umgefallen, vor Erreichen des Endurchmessers während der Abscheidung sind keine Chargen umgefallen.

### Beispiel 4:

Zur Abscheidung wurden erfindungsgemäße Elektroden mit hochgezogenem Rand verwendet, die aus 3 verschiedenen Zonen unterschiedlicher spezifischer Wärmeleitfähigkeit bestanden. Zusätzlich wurde bei dieser Elektrode der obere Rand verbreitert (siehe Fig. 4). An der Basis der Elektrode wurde ein Kühlkörper verwendet. Zone (A) der verwendeten Elektroden bestand aus höchstreinem Elektrographit mit einer spezifischen Wärmeleitfähigkeit von 135 W/(m*K) und einem spezifischen elektrischen Widerstand von 10 µOhm*m. Zone (C) der verwendeten Elektroden bestand aus höchstreinem Elektrographit mit einer spezifischen Wärmeleitfähigkeit von 100 W/(m*K) und einem spezifischen elektrischen Widerstand von 12 µOhm*m. Für die innere Zone (B) wurde ein höchstreiner Elektrographit mit einer spezifischen Wärmeleitfähigkeit von 50 W/(m*K) und einem spezifischen elektrischen Widerstand von 22 µOhm*m verwendet.

Die Elektrode hatte folgende Geometrie:

| | |
|---|---|
| Gesamtlänge (L): | 118 mm |
| Durchmesser (D) : | 65 mm |
| Konuswinkel (α): | 32° |
| Konuswinkel (β) : | 16° |
| Länge Elektrodenspitze (LS): | 21 mm |
| Durchmesser Elektrodenspitze (D5): | 34 mm |
| Durchmesser Innenrand (D6): | 46 mm |
| Durchmesser verbreiterter Rand (D7): | 130 mm |
| Länge Einsatz Zone (B) (LE1): | 46 mm |
| Durchmesser Einsatz Zone (B) (D5) : | 34 mm |
| Durchmesser Einsatz Zone (B) (D2) : | 22 mm |
| Länge Einsatz Zone (C) (LE2) : | 55 mm |
| Durchmesser Einsatz Zone (C) (D8) : | 70 mm |
| Durchmesser Einsatz Zone (C) (D9) : | 35 mm |
| Durchmesser Kühlkörper (D3): | 25 mm |
| Durchmesser Kühlkörper (D4) : | 45 mm |
| Länge Kühlkörper (LK) : | 50 mm |

Am Ende der Reaktion wurde der Reaktor geöffnet und die Anzahl der Chargen mit umgefallenen Polysiliciumstäben notiert. Von 100 Chargen war 1 Charge nach Erreichen des Enddurchmessers umgefallen, vor Erreichen des Endurchmessers während der Abscheidung sind keine Chargen umgefallen.

## Patentansprüche

1. Elektrode aus Graphit mit einer spezifischen Wärmeleitfähigkeit von 20 bis 200 w/(m*K), umfassend einen zylindrischen Grundkörper (1), dessen Querschnitt eine Grundfläche der Elektrode bildet, und eine kegel- oder pyramidenförmige Spitze (2), welche eine Vorrichtung (4) zur Aufnahme eines Filamentslabes (5) beinhaltet, und einen Rand (3), **dadurch gekennzeichnet, dass** die kegel-oder pyramidenförmige Spitze (2) oberhalb einer Grundfläche des Kegels oder der Pyramide, die mit der Grundfläche der Elektrode übereinstimmt, von einem Rand (3) umgeben ist.

2. Elektrode nach Anspruch 1, **dadurch gekennzeichnet, dass** der Rand oberhalb, unterhalb oder auf gleicher Höhe der Spitze der Elektrode endet.

3. Elektrode nach Anspruch 1 oder 2, **dadurch gekennzeichnet, dass** der Rand an seinem oberen Ende spitz, abgerundet, schräg oder flach ausgebildet ist.

4. Elektrode nach Anspruch 1 bis 3, **dadurch gekennzeichnet, dass** die Spitze der Elektrode eine Verschiebung im Bereich von 0 bis 20 mm, bezogen auf den Mittelpunkt der Grundfläche der Elektrode, besitzt.

5. Elektrode nach Anspruch 1 bis 4, **dadurch gekennzeichnet, dass** die Elektrode aus mehreren Zonen unterschiedlicher Graphit-Werkstoffe mit verschiedenen spezifischen Wärmeleitfähigkeiten besteht, wobei die spezifische Wärmeleitfähigkeit der Graphit-Werkstoffe von innen nach aussen ansteigt.

6. Elektrode nach Anspruch 1 bis 5, **dadurch gekennzeichnet, dass** eine oder mehrere der inneren Zonen als loser oder wechselbarer Einsatz ausgebildet ist.

7. Elektrode nach Anspruch 6, **dadurch gekennzeichnet, dass** die inneren Zonen mittels einer Steckverbindung mit der jeweils nächsten äußeren Zone verbunden sind.

8. Elektrode nach Anspruch 1 bis 7, **dadurch gekennzeichnet, dass** die Zonen gemeinsamen thermischen und elektrischen Kontakt haben.

9. Elektrode nach Anspruch 1 bis 8, **dadurch gekennzeichnet, dass** die Elektrode an ihrer Basis mit cincm kühlkörper gekoppelt wird.

10. Elektrode nach Anspruch 1 bis 9, **dadurch gekennzeichnet, dass** die Elektrode aus hoch- oder höchstreinem Elektrographit mit unterschiedlichen Wärmeleitfähigkeiten besteht.

11. Elektrode nach Anspruch 1 bis 10, **dadurch gekennzeichnet, dass** das verwendete Graphitmaterial einen oder mehrere der folgenden Parameter aufweist:
a.) spezifische Wärmeleitfähigkeit 20 bis 90 W/(m*K),
b.) spezifischer elektrischer Widerstand 30 bis 5 µOhm*m,
c.) arithmetischer Mittelrauwert der Oberflächenrauigkeit Ra 1 bis 20 µm bei einer Gesamthöhe des Rauheitsprofils Rt zwischen 10 und 200 µm und einer gemittelten Rautiefe Rz zwischen 8 und 160 µm,
d.) Druckfestigkeit 40 bis 250 MPa,
e.) Biegefestigkeit 10 bis 100 MPa,
f.) Elastizitätsmodul 1 bis 20 GPa,
g.) linearer thermischer Ausdehnungskoeffizient im Temperaturbereich 20 bis 1000 °C, 2*10⁻⁶ bis 10*10⁻⁶ 1/K,
h.) offene Porosität 5 bis 25%.

12. Verfahren zur Herstellung von polykristallinem Silicium durch Abscheidung von hochreinem elementaren Silicium aus der Gasphase an der Oberfläche von Siliciumstäben, **dadurch gekennzeichnet, dass** die Siliciumstäbe im Reaktor von Elektroden gemäß einem oder mehreren der Ansprüche 1 bis 11 gehalten werden.

## Claims

1. Graphite electrode having a specific thermal conductivity of 20 to 200 W/(m*K), comprising a cylindrical main body (1), the cross section of which forms a base surface of the electrode, and a conical or pyramidal tip (2), which contains a device (4) for receiving a filament rod (5), and an edge (3), **characterized in that** the conical or pyramidal tip (2), above a base surface of the cone or of the pyramid, which base surface corresponds to the base surface of the electrode, is surrounded by an edge (3).

2. Electrode according to Claim 1, **characterized in that** the edge ends above, below or at the same height as the tip of the electrode.

3. Electrode according to Claim 1 or 2, **characterized in that** the edge is formed so as to be acute, rounded, oblique or flat at its upper end.

4. Electrode according to one of Claims 1 to 3, **characterized in that** the tip of the electrode has an offset in the range of from 0 to 20 mm in relation to the midpoint of the base surface of the electrode.

5. Electrode according to one of Claims 1 to 4, **characterized in that** the electrode consists of a plurality of zones of different graphite materials with different specific thermal conductivities, the specific thermal conductivity of the graphite materials increasing from the inside outward.

6. Electrode according to one of Claims 1 to 5, **characterized in that** one or more of the inner zones is formed as a loose or replaceable insert.

7. Electrode according to Claim 6, **characterized in that** the inner zones are connected to the respective closest outer zone by a plug connection.

8. Electrode according to one of Claims 1 to 7, **characterized in that** the zones have common thermal and electrical contact.

9. Electrode according to one of Claims 1 to 8, **characterized in that** the electrode is coupled to a heat sink at its base.

10. Electrode according to one of Claims 1 to 9, **characterized in that** the electrode consists of highly pure or ultrapure electrographite with different thermal conductivities.

11. Electrode according to one of Claims 1 to 10, **characterized in that** the graphite material used has one or more of the following parameters:
a.) specific thermal conductivity 20 to 90 W/(m*K),
b.) electrical resistivity 30 to 5 µOhm*m,
c.) arithmetic mean roughness value of the surface roughness Ra 1 to 20 µm with an overall height of the roughness profile Rt between 10 and 200 µm and an averaged roughness depth Rz between 8 and 160 µm,
d.) compressive strength 40 to 250 MPa,
e.) flexural strength 10 to 100 MPa,
f.) Young's modulus 1 to 20 GPa,
g.) linear thermal expansion coefficient, in the temperature range of from 20 to 1000°C, 2*10⁻⁶ to 10*10⁻⁶ 1/K,
h.) open porosity 5 to 25%.

12. Method for producing polycrystalline silicon by depositing highly pure elementary silicon from the gas phase onto the surface of silicon rods, **characterized in that** the silicon rods are held in the reactor by electrodes according to one or more of Claims 1 to 11.

## Revendications

1. Electrode en graphite présentant une conductivité thermique spécifique de 20 à 200 W/(m*K), comprenant un corps cylindrique de base (1) dont la section transversale forme une surface de base de l'électrode, et une pointe (2) en forme de cône ou de pyramide qui contient un dispositif (4) de reprise d'un barreau (5) de filament, et un bord (3), **caractérisée en ce que** la pointe (2) en forme de cône ou de pyramide est entourée par un bord (3) au-dessus d'une surface de base du cône ou de la pyramide qui correspond à la surface de base de l'électrode.

2. Electrode selon la revendication 1, **caractérisée en ce que** le bord se termine au-dessus, en dessous ou à même hauteur que la pointe de l'électrode.

3. Electrode selon les revendications 1 ou 2, **caractérisée en ce que** l'extrémité supérieure du bord est en pointe, arrondie, oblique ou aplatie.

4. Electrode selon les revendications 1 à 3, **caractérisée en ce que** la pointe de l'électrode présente un décalage de l'ordre de 0 à 20 mm par rapport au centre de la surface de base de l'électrode.

5. Electrode selon les revendications 1 à 4, **caractérisée en ce que** l'électrode est constituée de plusieurs zones présentant des matériaux de graphite différents dont les conductivités thermiques spécifiques sont différentes, la conductivité thermique spécifique des matériaux de graphite augmentant de l'intérieur vers l'extérieur.

6. Electrode selon les revendications 1 à 5, **caractérisée en ce que** l'une ou plusieurs des zones intérieures sont configurées comme garniture lâche ou remplaçable.

7. Electrode selon la revendication 6, **caractérisée en ce que** les zones intérieures sont reliées à la zone extérieure suivante respective au moyen d'une liaison enfichable.

8. Electrode selon les revendications 1 à 7, **caractérisée en ce que** les zones possèdent un contact thermique et électrique commun.

9. Electrode selon les revendications 1 à 8, **caractérisée en ce que** l'électrode est couplée à sa base à un corps de refroidissement.

10. Electrode selon les revendications 1 à 9, **caractérisée en ce que** l'électrode est constituée d'électrographite à pureté élevée ou très élevée et de conductivités thermiques différentes.

11. Electrode selon les revendications 1 à 10, **caractérisée en ce que** le matériau de graphite utilisé présente un ou plusieurs des paramètres suivantes :
a.) une conductivité thermique spécifique de 20 à 90 W/(m*K),
b.) une résistance électrique spécifique de 30 à 5 µOhm*m,
c.) une valeur moyenne arithmétique de rugosité de surface Ra de 1 à 20 µm pour une hauteur totale du profil de rugosité Rt comprise entre 10 et 200 µm et une profondeur moyenne de rugosité Rz comprise entre 8 et 160 µm,
d.) une résistance à la compression de 40 à 250 MPa,
e.) une résistance à la flexion de 10 à 100 MPa,
f.) un module d'élasticité de 1 à 20 GPa,
g.) un coefficient de dilatation thermique linéaire de 2*10⁻⁶ à 10*10⁻⁶ 1/K dans la plage de températures de 20 à 1 000 °C,
h.) une porosité ouverte de 5 à 25 %.

12. Procédé de fabrication de silicium polycristallin par dépôt en phase gazeuse de silicium élémentaire de haute pureté sur la surface de barreaux de silicium, **caractérisé en ce que** les barreaux de silicium sont maintenus dans le réacteur par des électrodes selon l'une ou plusieurs des revendications 1 à 11.
